# EUROPEAN PATENT SPECIFICATION

(11) **EP 1 768 517 B1**
(45) Date of publication and mention of the grant of the patent: **12.12.2007**
(21) Application number: 05762431.4
(22) Date of filing: 17.06.2005
(51) Int. Cl.: A47C 7/46

(54) **MOUNTING ADAPTOR FOR SEAT ASSEMBLY, AND SEAT ASSEMBLY HAVING MOUNTING ADAPTOR**
MONTAGEADAPTER FÜR SITZANORDNUNG UND SITZANORDNUNG MIT MONTAGEADAPTER
ADAPTATEUR DE MONTAGE POUR ENSEMBLE SIEGE ET ENSEMBLE SIEGE COMPRENANT CET ADAPTATEUR

(30) Priority: 18.06.2004 US 872324
(43) Date of publication of application: 04.04.2007
(73) Proprietor: Alfmeier Corporation, Greenville, SC 29605 (US)
(72) Inventor: VOGT, Brandon, Northville, MI 48167 (US); MASSARA, Andrew, Birmingham, MI 48009 (US); SCHAFER, Rolf, 91725 Ehingen (DE); BEYERLEIN, Wolfgang, 91734 Mitteleschenbach (DE)
(74) Representative: Mörtel & Höfner
(86) International application number: PCT/US2005/021505
(87) International publication number: WO 2006/009861

(56) References cited:
- GB-A- 2 012 569
- US-A- 4 715 653
- US-A- 4 725 095
- US-A- 5 826 312
- US-A- 5 954 399

## Description

### FIELD OF INVENTION

The present invention relates generally to various designs for mounting adaptors for seat assemblies and seat assemblies using particular mounting adaptor designs. The adaptors may be used with any manner of seats and supports, such as seat back or base supports, or lumbar supports, and the like.

### BACKGROUND OF INVENTION

Seats such as vehicle seats may be constructed using a rigid internal frame having a support extending across portions of the frame. The supports may comprise metal members such as rods, coils, bars, straps, or the like. Examples of seat support configurations are shown in U.S. Patent Nos. 4,880,271; 5,911,477; 6,152,531; 6,595,585; and Application No. U.S. 2003/0227203. Padding is placed over the supports and frames for comfort. The supports include back and bottom supports, as well as lumbar supports, which may be adjustable. Another example of such a seat is described in US 5,954,399.

The devices disclosed in the above patent publications suffer from various drawbacks. Often, supports and frames are both made of metal, at least at the points of contact. For example, metal support hooks may extend into openings in or tabs extending from the frame. Such metal-to-metal contact between supports and framework can cause "BSR" issues (noise comprising buzz, squeak, and/or rattle). Also the ends of supports may come loose if they traverse too far in an outward direction, thereby detaching the seat supports. Connecting the supports and frames more securely adds complicated steps to assembly and/or additional parts.

Other designs have been proposed, for example where a plastic "omega-shaped" mounting element is attached to a frame, with the loop of the omega pointing inward. Such plastic element therefore can replace a somewhat similarly shaped tab (such as Tab 5A shown in U.S. Patent No. 6,152,531) to provide a quieter assembly. However, the omega-shaped element still suffers the drawback of allowing the ends of supports to be moved laterally outward of the loop. Further, this design loads the loop in tension, which can in some circumstances cause failure in plastic elements.

### SUMMARY

Accordingly, it is an object of the invention to provide various adaptor designs, and related seat assembly designs, along with related methods of assembly, all of which will provide simple structure, reliable use, and ease of assembly, overcoming one or more of the above or other drawbacks found in conventional devices.

According to certain aspects of the invention, a disclosed seat assembly includes a frame having a first side member and a second side member, a support attached to and extending substantially across the frame between the first and second side members, the support including at least one attachment portion, and an adaptor configured for attachment to the frame. The attachment portion of the support is securable to the adaptor thereby attaching the support to the frame, the attachment portion and adaptor configured so that loading of the support causes the attachment portion to load the adaptor substantially in compression. Various options and modifications are possible.

For example, the frame and attachment portion may be made of metal and the adaptor made of a non-metal. The non-metal may be one of a plastic, a silicone, or an elastomer. If desired, the attachment portion may be formed as a hook, and the adaptor may include a base for receiving the hook. The adaptor may also include a passageway adjacent the base for guiding the attachment portion to the base, or the adaptor may include a hood adjacent the base for precluding movement of the hook in an outward direction relative to the frame. The hook may include a bending distal end, the adaptor configured so that the bending distal end is disposed substantially outside the frame.

If desired, the attachment portion and adaptor may be configured so as to substantially limit translational sliding of the attachment portion relative to the adaptor. Also, the attachment portion and adaptor may be configured so that an extending area of contact exists between the adaptor and the attachment portion. The adaptor may be configured for receiving the attachment portion so that the attachment portion may travel substantially in only one plane relative to the adaptor. The adaptor and frame may be configured so that the adaptor snaps into place within the frame, and the adaptor may include at least one flange for seating against an outer portion of the frame.

If desired, the support may be a lumbar support. If so, an adjustment mechanism may be mounted to the frame for moving the lumbar support relative to the frame. The lumbar support may include at least one spring member, the attachment portion extending from an end of the spring member. Alternatively, the support may be one of a seat back or bottom having a plurality of the attachment portions, and a plurality of the adaptors are provided, each adaptor for securing one of the attachment portions to the frame.

According to other aspects of the invention, a lumbar support seat assembly includes a frame having a first side member and a second side member, a lumbar support assembly attached to and extending substantially across the frame between the first and second side members, the lumbar support assembly including two attachment portions, and two adaptors configured for attachment to the frame. One adaptor is attached to the first side member and the other adaptor being attached to the second side member. Each attachment portion of the lumbar support assembly is securable to a respective one of the adaptors thereby attaching the lumbar support assembly to the frame, the attachment portion and adaptors configured so that loading of the lumbar support assembly causes the attachment portion to load the adaptors substantially in compression. As above, various options and modifications are possible.

According to other aspects of the invention, an adaptor for a seat assembly is disclosed, the adaptor for mounting a support extending substantially across a frame between first and second side members, the adaptor attachable to an opening in the frame, the support including a hook having a bending distal end. The adaptor includes a non-metal body including a mounting structure configured for attaching the body to the opening in the frame, a passageway extending through the body for receiving the hook, a base within the body for securing the bending distal end of the hook to the adaptor, and the mounting structure configured so that when the support is loaded the adaptor is loaded by the hook substantially in compression. As above, various options and modifications are possible.

According to still other aspects of the invention, a seat assembly includes a frame having a first side member and a second side member, a support attached to and extending substantially across the frame between the first and second side members, the support including at least one hook-shaped attachment portion having a distal end, and an adaptor configured for attachment to the frame. The attachment portion of the support is securable to the adaptor thereby attaching the support to the frame, the adaptor defining a passageway for receiving the attachment portion, a base for seating the distal end, and a hood for precluding movement of the attachment portion in an outward direction relative to the frame. Again, various modifications and options are possible.

According to other aspects of the invention, a lumbar support seat assembly includes a frame having a first side member and a second side member, a lumbar support assembly attached to and extending substantially across the frame between the first and second side members, the lumbar support assembly including two hook-shaped attachment portions each having a distal end, and two adaptors configured for attachment to the frame. One adaptor is attached to the first side member and the other adaptor being attached to the second side member, each attachment portion of the lumbar support assembly being securable to a respective one of the adaptors thereby attaching the lumbar support assembly to the frame, the adaptors each defining a passageway for receiving a respective attachment portion, and a base for seating a respective distal end. A hood precludes the movement of the respective attachment portion in an outward direction relative to the frame. As above, various options and modifications are possible.

According to still other aspects of the invention, an adaptor is disclosed for a seat assembly, the adaptor for mounting a support extending substantially across a frame between first and second side members, the adaptor attachable to an opening in the frame, the support including a hook having a bending distal end. The adaptor includes a body including a mounting structure configured for attaching the body to the opening in the frame, a passageway extending through the body for receiving the hook, a base within the body for securing the bending distal end of the hook to the adaptor, and a hood for precluding movement of the distal end in an outward direction relative to the frame. As above, various options and modifications are also possible within the scope of the invention.

### BRIEF DESCRIPTION OF THE DRAWINGS

The above and other aspects and advantages of the present invention are apparent from the detailed description below and in combination with the drawings in which:
Fig. 1 is a perspective representation of a seat assembly showing various options for mounting different types of supports according to certain aspects of the present invention.
Fig. 2 is a perspective view taken along line 2-2 in Fig. 1 showing mounting of a lumbar support using adaptors according to certain aspects of the present invention.
Fig. 3 is an enlarged partial sectional view of a portion of Fig. 2 noted by reference numeral 3.

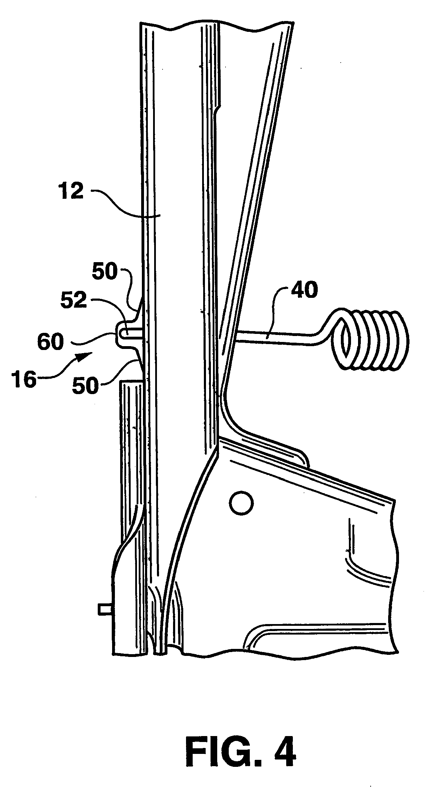

Fig. 4 is a front view of a portion of the seat of Fig. 2, as viewed from line 4-4.
Fig. 5 is a perspective view of a portion of the seat of Fig. 2 as viewed from line 5-5.
Fig. 6 is an end view of an adaptor according to certain aspects of the present invention.
Fig. 7 is a side view of the adaptor of Fig. 6.
Fig. 8 is a perspective view of the adaptor of Fig. 6.

### DETAILED DESCRIPTION

Reference will now be made in detail to embodiments of the invention, one or more examples of which are illustrated in the figures. Each embodiment is presented for purposes of explaining the invention, and not meant as a limitation of the invention. For example, features illustrated or described as part of one embodiment may be used with another embodiment to yield still a different embodiment. It is intended that the invention include these and other modifications and variations as come within the scope and spirit of the invention.

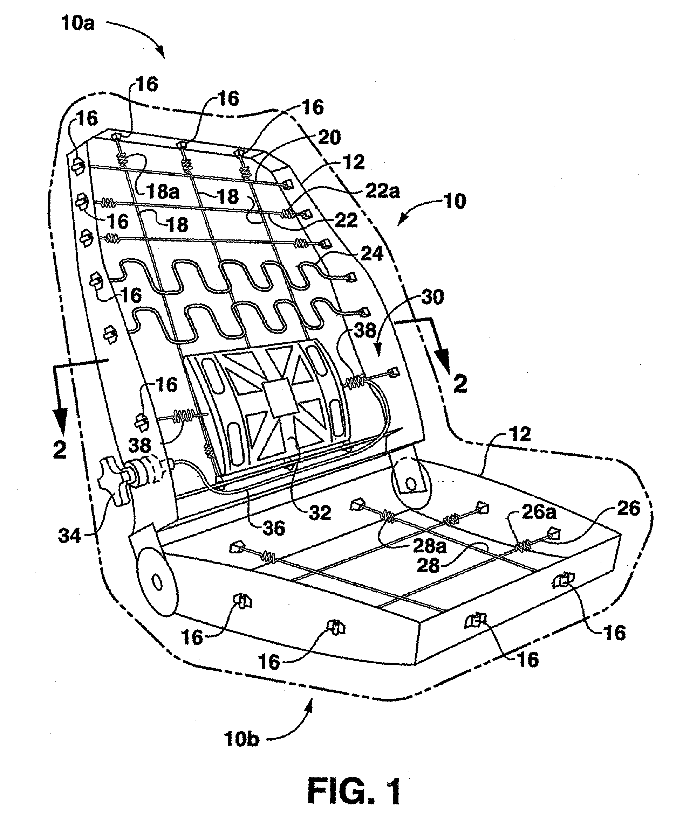

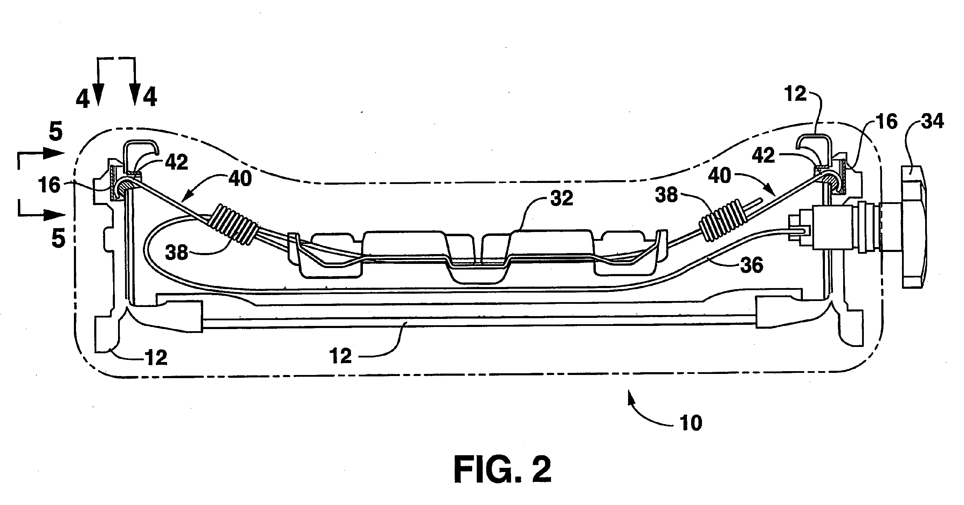

Figs. 1 and 2 broadly show in diagrammatic form a seat assembly 10 (including seat back portion 10a and seat bottom portion 10b) according to certain aspects of the present invention. As shown, the seat assembly includes a frame 12, a number of adaptors 14 and a number of supports 16, 18, 20, 22, 24, 26, 28 and 30. It should be understood that the present invention is not limited to any particular seat type, nor any support type. Accordingly, the present invention, in its various scopes and combinations, is suitable for use with various types of seats and supports in various ways. The example shown in Figs. 1 and 2 is accordingly a demonstrative example only and is not indicative of the full scope of the invention or of any particular limiting embodiment of the invention.

As shown, supports 18 comprise vertical support members of a seat back support. Supports 18 include spring portions 18a, as shown. Support 20 comprises a bar extending across the seat back portion without any spring portion. Supports 22 comprise bars, similar to supports 18 having spring portions 22a and extending across a seat back portion. Supports 24 comprise spring members such as sinuous members extending across the entire frame. Supports 26 and 28 comprise bars extending across seat bottom portion 10b, and include spring portions 26a and 28a.

Support 30 comprises a lumbar support assembly. As broadly shown herein, the lumbar support assembly includes a conventional support plate 32, an adjustment mechanism 34, a cable such as a Bowden cable 36 connecting the adjustment mechanism with other portions of the lumbar support assembly, such as springs 38. As is known, rotation of the adjustment assembly causes the adjustment cable to move in a way to move lumbar support plate 32 back and forth within the seat to improve comfort of the user of the seat.

Adaptors 16 are shown as used with each of the ends of all of the supports shown in Figs. 1 and 2, although it should be understood that, if desired, certain benefits of the invention could be achieved using adaptors on only one of the two ends of the supports. The adaptors are not shown in any detail in Fig. 1 or Fig. 2, only the relative positions are diagrammatically shown therein.

Typically, frame 12 is comprised substantially of metal members, and supports 18-30 also comprise a number of metal members as well. Particularly, the ends of supports 18-30 where the supports attach to portions of frame 12 are typically metal, having bending distal ends in the form of a hook or the like. It should be understood that, as shown below, such attachment portion shapes do provide certain benefits, but such shapes are not required for practice of all aspects of the present invention.

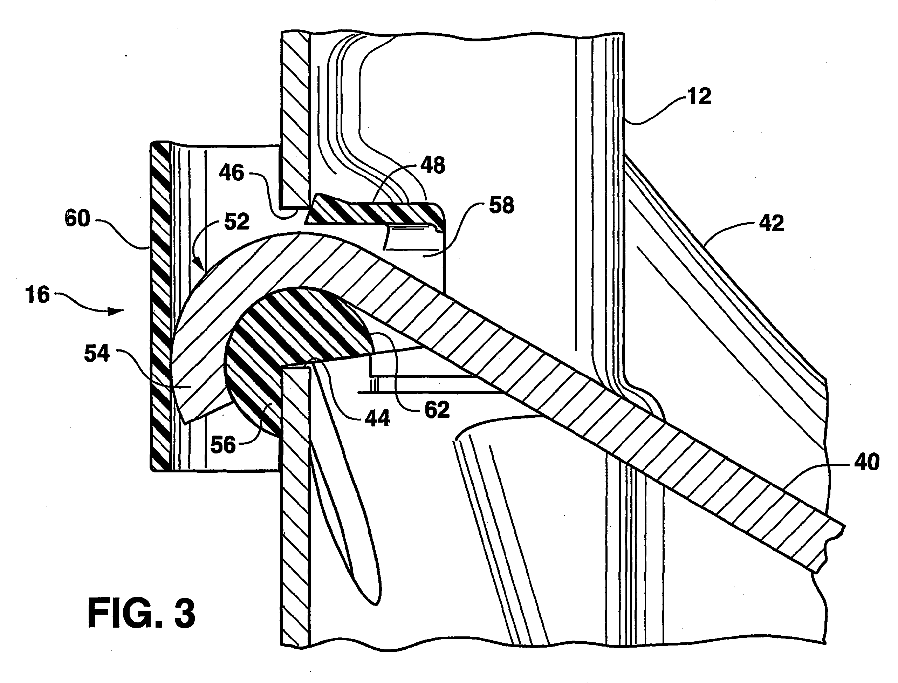

Fig. 3 shows a cross-sectional view of a portion of a possible interface between an adaptor 16, a support 40 (which could extend from any of adaptors 16-30, above) and a frame 12. As shown in Fig. 3, adaptor 16 is configured for attachment to frame 12, and attachment portion 42 of support 40 is securable to the adaptor to thereby attach the support to the frame. Accordingly, frame 12 may define an opening 44 into which adaptor 16 may be inserted. If desired, the opening may be non-symmetrically configured to ensure that adaptor 16 is properly inserted into the opening. As shown, a small mounting portion 46 may be formed on adaptor 16 in a shape to conform to opening 44. If the adaptor is to be inserted so as to stay in one position, such mounting flange could be, for example, D-shaped. However, it is also possible that, once inserted, adaptor 16 be configured to rotate relative to frame 12. In such situation, mounting portion 46 could instead comprise a circle and frame 12 could therefore define a mating circular opening 44. Allowing adaptor to pivot slightly relative to frame 12 allows for a further adjustment in movement of support 40 relative to frame, which could be desired in certain applications. Other attachment arrangements, such as bayonet fits, rotational lock fits, keys, sliding lock fits, etc. are also possible.

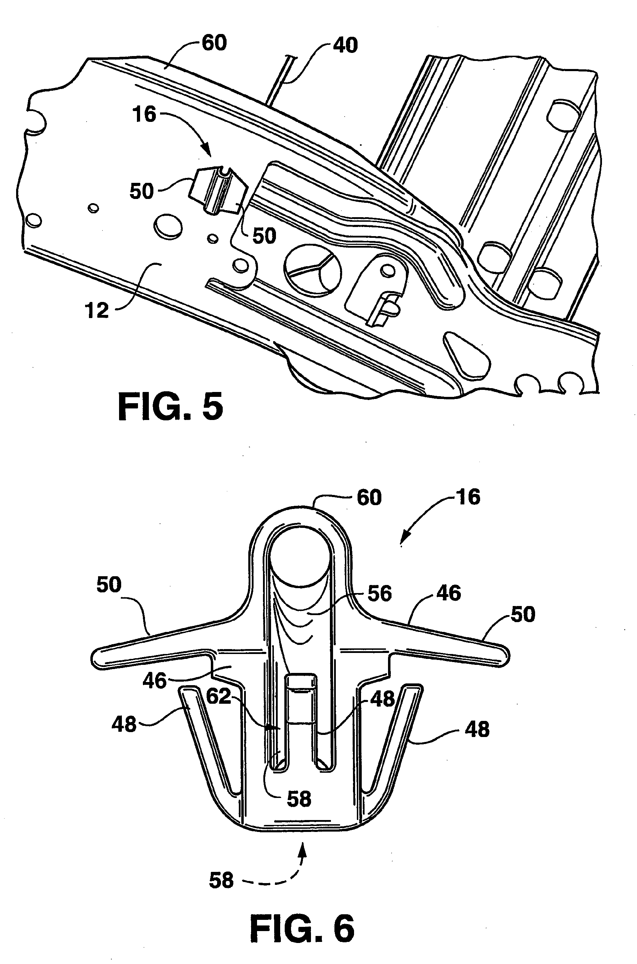

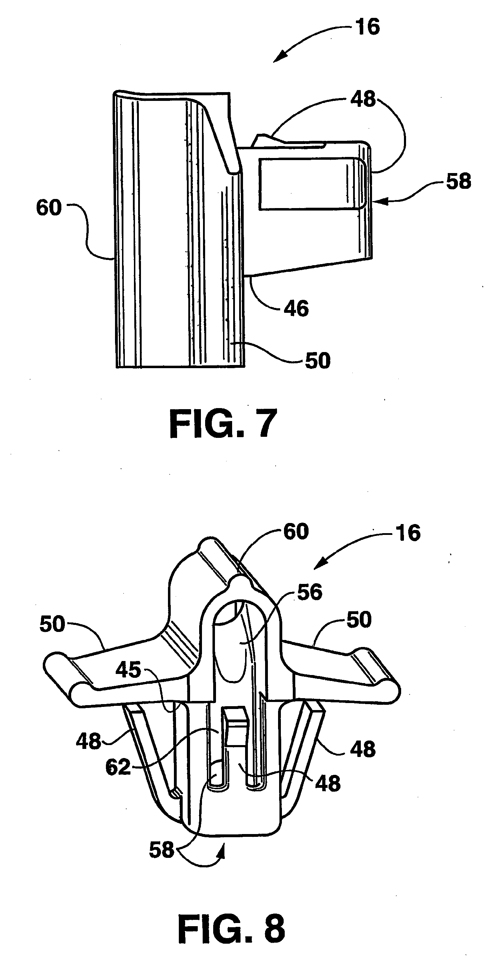

As shown in Figs. 3 and 6-8, adaptor 16 may include a number of cantilevered arms for snap-fitting adaptor 16 within opening 44. As shown, three such arms 48 are provided, although other numbers and arrangements are also possible. Also, at least one mounting flange 50 may also be provided on an outside portion of adaptor 16 to seat adaptor 16 in place. Therefore, adaptor 16 is essentially held in place between the snap-fit of arms 48 and mounting flange 50, as located within opening 44 via mounting portion 46. Again, adaptor 16 may or may not be movable relative to frame 12 once snapped into place, as desired.

As shown in Fig. 3, adaptor 16 may be configured in a manner such that once attachment portion 44 of support 40 is secured, that loading of the support causes the attachment portion to load the adaptor substantially in compression. Thus, as shown in Fig. 3, loading of attachment portion 42 would provide a force directed generally down and to the right loading adaptor 16 in compression. Attachment portion 42 may include a hook portion 52 having a bending distal end 54 that mates with a base 56 of adaptor 16. Thus, as shown in Fig. 3, bending distal end 54 is disposed substantially outside of frame 12 when assembled, and loading of adaptor 16 occurs in areas such as mounting flange 50, base 56, etc., substantially in compression. Such loading can be beneficial, for example, if adaptor 16 is made of a non-metal material, such as plastic. The plastic material could be a polyamide such as nylon or a POM such as acetyl, in either case with or without a glass fill. Loading of a non-metal such as a plastic in compression, rather than in tension, provides a more reliable construction in terms of potential for stretching or failure, due to inherent properties of plastics. The adaptor may be injection molded, if desired. Alternatively, the adaptor could be made of an elastomer, such as a rubber or a silicone compound. However, it should be understood that it is not necessary to utilize non-metal for the adaptor to achieve all aspects of the present invention. Use of a non-metal does provide benefits of eliminating BSR type noises by eliminating metal-to-metal contact which can be beneficial.

Adaptor 16 may also include additional structure for improving the mounting and retaining of attachment portion 42 of support 40 within adaptor 16. For example, a passageway 58 may be defined through adaptor 16 for guiding attachment portion 42 to base 56. The passageway may be generally in the form of an open trough or a tunnel, as desired. Also, a hood 60 may be provided at an outer portion of adaptor 16 so as to prevent movement of attachment portion 42 in an outward direction relative to frame 12 once assembled.

Use of passageway 58 and/or hood 60 improves the security of the attachment between parts without requiring more complex metal work, crimping, clips, etc. Thus, once assembled, attachment portion 42 and adaptor 16 are so configured so as to substantially limit translational sliding of the attachment portion relative to the adaptor in any direction. That is, hood 60 prevents attachment portion 42 from moving outward, base 56 prevents the attachment portion from moving inward or downward (as shown in Fig. 3), and passageway 56 prevents the attachment portion from moving upward (as shown in Fig. 3). Also, the widths of passageway 58 and hood 60 can be defined to be only slightly wider than attachment portion 42 so as to prevent motion of the attachment portion into or out of the plane of Fig. 3. Thus, adaptor 16 is configured for receiving attachment portion 42 so that the attachment portion may travel substantially in only one plane relative to the adaptor, that plane being a plane substantially parallel to the section shown in Fig. 3. While it should be understood that some play of attachment portion 42 relative to adaptor into or out of the plane is contemplated for purposes of assembly and prevention of binding during use, such motion is substantially precluded if all such structure is utilized. Such structure accordingly provides an additional benefit of providing a secure mounting of attachment portion 42 within adaptor 16 thereby substantially reducing the possibility of disattachment.

As shown in Fig. 3, passageway 58 includes a cutaway portion 62 to allow hook portion of 52 to be inserted into passageway 58 by rotating one part relative to the other during assembly. After assembly, such relative rotation is extremely unlikely during any expected use of the seat, including jolts from accidents or the like, therefore providing a secure attachment that is at the same time relatively simple to assemble.

As stated above, various options are possible with the adaptor, seat assembly, including a lumbar support assembly, shown herein. For example, it would be possible to reverse mounting flange 50 and arms 48 so that adaptor 16 would snap in from the inside, rather than the outside. Also, it would be possible to change the arrangement of base 56 relative to frame 12 such that base 56 would be loaded in tension, rather than compression.

It should also be understood that other types of support attachment portions could be utilized while still obtaining certain benefits of the invention. Thus, if desired, any of the supports shown in Fig. 1 could be slid through an opening similar to hood 60 disposed on an inner surface of a modified adaptor so as to mount the supports in place. Such structure could be particularly useful for sinuous coil-type supports, such as support 24. In such case, the benefits provided by using the bending distal end of attachment portion 42 might not be achieved in all cases, but the benefits of BSR improvement, snap-in attachment, easy assembly, etc. could still be achieved.

Accordingly, it should be understood that the above disclosure is an exemplary disclosure of various options, and should not be considered limiting as to the full scope of the invention. It is possible to mix and match different features from the different figures to achieve new or revised embodiments. The true scope and spirit of the present invention is set forth in the appending claims and their equivalents.

## Claims

1. A seat assembly (10) comprising:
a frame (12) having a first side member and a second side member, at least one of the side members of the frame defining an opening (44) therethrough;
a support (18, 20, 22, 24, 26, 28, 30, 40) attached to and extending substantially across the frame between the first and second side members, the support including at least one attachment portion (42); and
an adaptor (16) configured for insertion into the opening (44) and configured for attachment to the frame (12), the attachment portion (42) of the support (18, 20, 22, 24, 26, 28, 30, 40) being securable to the adaptor (16) thereby attaching the support to the frame (12),
**characterized in that**,
at least one of the side members of the frame (12) has an outside surface which extends in the longitudinal direction of the seat assembly, the opening (44) being defined through the outside surface, the attachment portion (42) and adaptor (16) being configured so that loading of the support causes the attachment portion (42) to load the adaptor (16) substantially in compression between the attachment portion and the outside surface.

2. The seat assembly of claim 1, further **characterized in that** the adaptor (16) comprises a base 56, whereby at least a portion of the base (56) is located outside of frame (12) and is loaded by the attachment portion (42) of the support (18, 20, 22, 24, 26, 28, 30, 40), thereby pressing a part of the adaptor (16) against the outside surface.

3. The seat assembly of claim 1 or 2, further **characterized in that** attachment portion (42) has a bending distal end (54) in the form of a hook (52) or the like, which extends through the opening (44) of the frame (12), is disposed substantially outside the frame (12) and loads the adaptor (16).

4. The seat assembly of claim 3, further **characterized in that** the bending distal end (54) loads the base (56).

5. The seat assembly of one of the preceding claims, further **characterized in that** the adaptor (16) is configured for receiving the attachment portion (42) so that the attachment portion (42) may travel substantially in only one plane relative to the adaptor (16).

6. The seat assembly of claim 5, further **characterized in that** the bending distal end (54) of the attachment portion (42) is fixed to and mates with the base (56) of adaptor (16) so that the attachment portion (42) is pivotable in the mentioned plane.

7. The seat assembly of claim 5 or 6, further **characterized in that** the adaptor comprises a passageway (58) for guiding the attachment portion (42), the width of passageway (58) is defined to be only slightly wider than attachment portion (42), so as to prevent motion of the attachment portion (42) transverse to said plane.

8. The seat assembly of one of the preceding claims, further **characterized in that** the frame (12) and attachment portion (42) are made of metal and the adaptor (16) is made of a non-metal.

9. The seat assembly of claim 8, further **characterized in that** the non-metal is one of a plastic, a silicone, or an elastomer.

10. The seat assembly of one of the claims 2 - 9, further **characterized in that** the adaptor (16) includes a passageway (58) adjacent the base (56) for guiding the bending distal end (54) to the base (56).

11. The seat assembly of one of claims 2 - 10, further **characterized in that** the adaptor (16) includes a hood (60) adjacent the base (56) for precluding movement of the bending distal end (4) in an outward direction relative to the frame (12).

12. The seat assembly of one of the preceding claims, further **characterized in that** the attachment portion (42) and adaptor (16) are configured so as to substantially limit translational sliding of the attachment portion (42) relative to the adaptor (16).

13. The seat assembly of one of the preceding claims, further **characterized in that** the attachment portion (42) and adaptor (16) are configured so that an extending area of contact exists between the adaptor (16) and the attachment portion (42).

14. The seat assembly of one of the preceding claims, further **characterized in that** the adaptor (16) and frame (12) are configured so that the adaptor (16) snaps into place within the frame (12).

15. The seat assembly of one of the preceding claims, further **characterized in that** the adaptor includes at least one flange (50) for seating against the outside surface of the frame (12).

16. The seat assembly of one of the preceding claims, further **characterized in that** the support is a lumbar support (30) including a lumbar support plate.

17. The seat assembly of claim 16, further **characterized in that** an adjustment mechanism (34) is mounted to the frame (12) for moving the lumbar support (30) relative to the frame (12).

18. The seat assembly of one of claims 16-17, further **characterized in that** the lumbar support (30) includes at least one spring member (38), the attachment portion (42) extending from an end of the spring member (38).

19. The seat assembly of one of claims 1-13, further **characterized in that** the support (18, 20, 22, 24, 26, 28, 30, 40) is one of a seat back (10a) or bottom (10b) having a plurality of the attachment portions (42), and a plurality of the adaptors (16) are provided, each adaptor (16) for securing one of the attachment portions (42) to the frame (12).

20. The seat assembly of one of the preceding claims, further **characterized in that** two of the openings (44) are provided, one in each of the side members, and two of the adaptors (16) are provided for insertion into the openings.

## Patentansprüche

1. Eine Sitzanordnung (10) umfassend:
einen Rahmen mit einem ersten Seitenelement und einem zweiten Seitenelement, wobei mindestens ein Seitenelement des Rahmens eine Öffnung aufweist,
eine Stütze (18, 20, 22, 24, 26, 28, 30, 40), die an erstem und zweiten Seitenelement befestigt ist und sich im Wesentlichen quer über den Rahmen zwischen erstem und zweiten Seitenelement erstreckt, wobei die Stütze mindestens ein Befestigungsteil (42) beinhaltet; und
einen Adapter (16), der zum Einbringen in die Öffnung (44) und zum Befestigen an dem Rahmen (12) vorgesehen ist, wobei das Befestigungsteil am Adapter (16) fixiert und **dadurch** die Stütze mit dem Rahmen (12) verbunden ist,
**dadurch gekennzeichnet, dass**
mindestens eines der Seitenelemente des Rahmens (12) eine sich in Längsrichtung der Sitzanordnung erstreckende Außenfläche aufweist und die Öffnung (44) in dieser Außenfläche vorhanden ist, wobei das Befestigungsteil (42) und der Adapter (16) so gestaltet sind, dass bei Belastung der Stütze der Adapter (16) zwischen Befestigungsteil und Außenfläche im Wesentlichen auf Druck belastet ist.

2. Sitzanordnung nach Anspruch 1,
**dadurch gekennzeichnet, dass**
der Adapter (16) eine Basis (56) aufweist, wobei sich mindestens ein Teil der Basis (56) außerhalb des Rahmens (12) befindet und von dem Befestigungsteil (42) der Stütze (18, 20, 22, 24, 26, 28, 30, 40) so belastet wird, dass ein Teil des Adapters (16) gegen die Außenfläche gedrückt wird.

3. Sitzanordnung nach Anspruch 1 oder 2,
**dadurch gekennzeichnet, dass**
das Befestigungsteil (42) ein gebogenes Distalende (54) in Form eines Hakens oder Ähnlichem, der sich durch die Öffnung (42) des Rahmens (12) erstreckt, im Wesentlichen außerhalb des Rahmens (12) angeordnet ist und den Adapter beaufschlagt.

4. Sitzanordnung nach Anspruch 3,
**dadurch gekennzeichnet, dass**
das gebogene Distalende (54) die Basis (56) beaufschlagt.

5. Sitzanordnung nach einem der vorangehenden Ansprüche,
**dadurch gekennzeichnet, dass**
der Adapter (16) so konfiguriert ist, dass er das Befestigungsteil (42) so aufnimmt, dass sich das Befestigungsteil (42) im Wesentlichen in nur einer Ebene relativ zum Adapter (16) bewegen kann.

6. Sitzanordnung nach Anspruch 5,
**dadurch gekennzeichnet, dass**
das gebogene Distalende (54) des Befestigungsteils (42) an der Basis (56) des Adapters (16) befestigt ist und mit diesem so ineinander greift, dass das Befestigungsteil (42) in der genannten Ebene drehbar ist.

7. Sitzanordnung nach Anspruch 5 oder 6,
**dadurch gekennzeichnet, dass**
der Adapter (16) einen Durchgang (58) aufweist, der zum Führen des Befestigungsteils (42) dient und eine nur geringfügig größere Breite als das Befestigungsteil (42) hat, so dass eine Bewegung des Befestigungsteils quer zur genannten Ebene verhindert wird.

8. Sitzanordnung nach einem der vorangehenden Ansprüche,
**dadurch gekennzeichnet, dass**
der Rahmen (12) und das Befestigungsteil (42) aus Metall bestehen und der Adapter (16) aus einem Nicht-Metall besteht.

9. Sitzanordnung nach Anspruch 8,
**dadurch gekennzeichnet, dass**
das Nicht-Metall entweder ein Kunststoff, ein Silicon oder ein Elastomer ist.

10. Sitzanordnung nach einem der Ansprüche 2-9,
**dadurch gekennzeichnet, dass**
der Adapter (16) einen an die Basis (56) angrenzenden Durchgang (58) aufweist , der zur Führung des gebogenen Distalendes an der Basis dient.

11. Sitzanordnung nach einem der Ansprüche 2-10,
**dadurch gekennzeichnet, dass**
der Adapter (16) eine an die Basis (56) angrenzende Haube (60) besitzt, die eine Bewegung des gebogenen Distalendes (54) aus dem Rahmen hinaus verhindert.

12. Sitzanordnung nach einem der vorhergehenden Ansprüche,
**dadurch gekennzeichnet, dass**
das Befestigungsteil (42) und der Adapter (16) so konfiguriert sind, das ein translatorisches Verrutschen des Befestigungsteils (42) relativ zum Adapter (16) im Wesentlichen begrenzt ist.

13. Sitzanordnung nach einem der vorangehenden Ansprüche,
**dadurch gekennzeichnet, dass**
das Befestigungsteil (42) und der Adapter (16) so konfiguriert sind, dass ein ausgedehnter Kontaktbereich zwischen dem Adapter (16) und dem Befestigungsteil (42) existiert.

14. Sitzanordnung nach einem der vorangehenden Ansprüche,
**dadurch gekennzeichnet, dass**
der Adapter (16) und der Rahmen (12) so konfiguriert sind, dass der Adapter (16) in den Rahmens (12) einschnappt.

15. Sitzanordnung nach einem der vorangehenden Ansprüche,
**dadurch gekennzeichnet, dass**
der Adapter mindestens einen Flansch (50) zum Anlegen an die Außenfläche des Rahmens aufweist.

16. Sitzanordnung nach einem der vorangehenden Ansprüche,
**dadurch gekennzeichnet, dass**
die Stütze eine Lumbal-Stütze (30) ist, die eine Lumbal-Stützplatte beinhaltet.

17. Sitzanordnung nach Anspruch 16,
**dadurch gekennzeichnet, dass**
eine Justiereinrichtung (34) am Rahmen (12) montiert ist, mit Hilfe derer die Lumbal-Stütze (30) relativ zum Rahmen (12) bewegt werden kann.

18. Sitzanordnung nach einem der Ansprüche 16-17,
**dadurch gekennzeichnet, dass**
die Lumbal-Stütze (30) mindestens ein Federelement (38) beinhaltet, wobei sich das Befestigungsteil (42) von einem Ende des Federelements weg erstreckt.

19. Sitzanordnung nach einem der Ansprüche 1-13,
**dadurch gekennzeichnet, dass**
es sich bei der Stütze (18, 20, 22, 24, 26, 28, 30, 40) um die Stütze einer einer Sitzlehne (10a) oder einer Sitzfläche (10b) handelt und dass sie mehrere Befestigungsteile (42) und mehrere Adapter (16) aufweist, wobei jeder Adapter (16) zum Fixieren jeweils eines der Befestigungselemente (42) am Rahmen dient.

20. Sitzanordnung nach einem der vorhergehenden Ansprüche,
**dadurch gekennzeichnet, dass**
zwei der Öffnungen (44), und zwar eine in jeweils einem der Seitenelemente, vorhanden sind und zwei der Adapter (16) zum Einbringen in die Öffnungen vorgesehen sind.

## Revendications

1. Ensemble (10) de siège comprenant :
un cadre (12) ayant un premier élément latéral et un deuxième élément latéral, au moins l'un des éléments latéraux du cadre y définissant une ouverture (44) ;
un support (18, 20, 22, 24, 26, 28, 30, 40) fixé au cadre et s'étendant sensiblement transversalement au cadre entre les premier et deuxième éléments latéraux, le support comprenant au moins une partie (42) de fixation ; et
un adaptateur (16) configuré pour s'insérer dans l'ouverture (44) et configuré pour se fixer au cadre (12), la partie (42) de fixation du support (18, 20, 22, 24, 26, 28, 30, 40) pouvant être assujettie à l'adaptateur (16) en fixant ainsi le support au cadre (12),
**caractérisé en ce que**
au moins l'un des éléments latéraux du cadre (12) a une surface extérieure qui s'étend dans la direction longitudinale de l'ensemble de siège, l'ouverture étant définie dans la surface extérieure, la partie (42) de fixation et l'adaptateur (16) étant configurés de sorte que charger le support fait que la partie (42) de fixation charge l'adaptateur (16) sensiblement en compression entre la partie de fixation et la surface extérieure.

2. Ensemble de siège suivant la revendication 1, **caractérisé en outre en ce que** l'adaptateur (16) comprend une base (56), au moins une partie de la base (56) étant disposée à l'extérieur du cadre (12) et étant chargée par la partie (42) de fixation du support (18, 20, 22, 24, 26, 28, 30, 40) en pressant ainsi une partie de l'adaptateur (16) sur la surface extérieure.

3. Ensemble de siège suivant la revendication 1 ou 2, **caractérisé en outre en ce que** la partie (42) de fixation a une extrémité (54) distale se courbant, sous la forme d'un crochet (52) ou analogue, qui passe dans l'ouverture (44) du cadre (12), est disposée sensiblement à l'extérieur du cadre (12) et charge l'adaptateur (16).

4. Ensemble de siège suivant la revendication 3, **caractérisé en outre en ce que** l'extrémité (54) distale se courbant charge la base (56).

5. Ensemble de siège suivant l'une des revendications précédentes, **caractérisé en outre en ce que** l'adaptateur (16) est configuré pour recevoir la partie (42) de fixation de manière à ce que la partie (42) de fixation puisse se déplacer sensiblement dans seulement un plan par rapport à l'adaptateur (16).

6. Ensemble de siège suivant la revendication 5, **caractérisé en outre en ce que** l'extrémité (54) distale se courbant de la partie (42) de fixation est fixée à la base (56) de l'adaptateur (16) et s'y adapte de sorte que la partie (42) de fixation peut pivoter dans le plan mentionné.

7. Ensemble de siège suivant la revendication 5 ou 6, **caractérisé en outre en ce que** l'adaptateur comprend un passage (58) pour guider la partie (42) de fixation, la largeur du passage (58) étant définie de manière à ce qu'il soit seulement légèrement plus large que la partie (42) de fixation de façon à empêcher un mouvement de la partie (42) de fixation transversalement au diplan.

8. Ensemble de siège suivant l'une des revendications précédentes, **caractérisé en outre en ce que** le cadre (12) et une partie (42) de fixation sont en métal et l'adaptateur (16) n'est pas en métal.

9. Ensemble de siège suivant la revendication 8, **caractérisé en outre en ce qui** n'est pas en métal est de la matière plastique, un silicone ou un élastomère.

10. Ensemble de siège suivant l'une des revendications 2 à 9, **caractérisé en outre en ce que** l'adaptateur (16) comprend un passage (58) voisin de la base (56) pour guider vers la base (56) l'extrémité (54) distale se courbant.

11. Ensemble de siège suivant l'une des revendications 2 à 10, **caractérisé en outre en ce que** l'adaptateur (16) comprend une hotte (60) voisine de la base (56) pour empêcher un mouvement, dans une direction vers l'extérieur par rapport au cadre (12), de l'extrémité (4) distale qui se courbe.

12. Ensemble de siège suivant l'une des revendication précédentes, **caractérisé en outre en ce que** la partie (42) de fixation et l'adaptateur (16) sont configurés de manière à limiter sensiblement un glissement en translation de la partie (42) de fixation par rapport à l'adaptateur (16).

13. Ensemble de siège suivant l'une des revendications précédentes, **caractérisé en outre en ce que** la partie (42) de fixation et l'adaptateur (16) sont configurés de manière à ce qu'une superficie étendue de contact existe entre l'adaptateur (16) et la partie (42) de fixation.

14. Ensemble de siège suivant l'une des revendications précédentes, **caractérisé en outre en ce que** l'adaptateur (16) et le cadre (12) sont configurés de manière à ce que l'adaptateur (16) s'encliquette dans le cadre (12).

15. Ensemble de siège suivant l'une des revendications précédentes, **caractérisé en outre en ce que** l'adaptateur comprend au moins une bride (50) s'appuyant sur la surface extérieure du cadre (12).

16. Ensemble de siège suivant l'une des revendications précédentes, **caractérisé en outre en ce que** le support est un support (30) lombaire comprenant une plaque de support lombaire.

17. Ensemble de siège suivant la revendication 16, **caractérisé en outre en ce qu'**un mécanisme (34) de réglage est monté sur le cadre (12) pour déplacer le support (30) lombaire par rapport au cadre (12).

18. Ensemble de siège suivant l'une des revendications 16 ou 17, **caractérisé en outre en ce que** le support (30) lombaire comprend au moins un élément (38) à ressort, la partie (42) de fixation s'étendant à partir d'une extrémité de l'élément (38) à ressort.

19. Ensemble de siège suivant l'une des revendications 1 à 13, **caractérisé en outre en ce que** le support (18, 20, 22, 24, 26, 28, 30, 40) est l'un d'un dossier (10a) de siège ou d'un fond (10b) ayant une pluralité de parties (42) de fixation et il est prévu une pluralité d'adaptateurs (16), chaque adaptateur (16) assujettissant l'une des parties (42) de fixation au cadre (12).

20. Ensemble de siège suivant l'une des revendications précédentes, **caractérisé en outre en ce qu'**il est prévu deux des ouvertures (44), l'une dans chacun des éléments latéraux et il est prévu deux des adaptateurs destinés à s'insérer dans les ouvertures.
